# EUROPÄISCHE PATENTSCHRIFT

(11) **EP 0 789 343 B1**
(45) Veröffentlichungstag und Bekanntmachung des Hinweises auf die Patenterteilung: **16.08.2001**
(21) Anmeldenummer: 97250016.9
(22) Anmeldetag: 29.01.1997
(51) Int. Cl.: G08G 1/09

(54) **Selektion von Verkehrsinformationen**
Traffic information selection
Sélection d'information de trafic

(30) Priorität: 06.02.1996 DE 19606259
(43) Veröffentlichungstag der Anmeldung: 13.08.1997
(73) Patentinhaber: MANNESMANN Aktiengesellschaft, 40213 Düsseldorf (DE)
(72) Erfinder: Vieweg, Stefan, 40547 Düsseldorf (DE)
(74) Vertreter: Meissner, Peter E., Dipl.-Ing.

(56) Entgegenhaltungen:
- DE-A- 4 321 437
- DE-A- 4 322 288
- FR-A- 2 700 629
- US-A- 5 465 089

## Beschreibung

Die Erfindung betrifft ein Verfahren zur Selektion von empfangenen oder zu sendenden Verkehrsinformationen in einem Fahrzeug, wobei die Selektion in Abhängigkeit vom Typ der Straße, die das Fahrzeug gerade befährt, erfolgt, sowie eine Vorrichtung zur Durchführung dieses Verfahrens.

Aus der DE 43 22 288 A1 ist ein Verfahren zur Auswertung von Verkehrsmeldungen über eine Verkehrsmeldungenselektiereinrichtung bekannt, wobei die Verkehrsinformationen in Abhängigkeit vom aktuellen Standort des Fahrzeuges selektiert werden. Der Standort des Fahrzeuges wird dabei mittels GPS ermittelt.

Die Erfassung und Beschreibung der Verkehrslage ist eine wesentliche Aufgabe im Bereich der Verkehrstelematik, die das Ziel hat, Situationen mit Verkehrsstau nach Möglichkeit zu entzerren und zu vermeiden durch entsprechende vorausschauende Umlenkung von Verkehrsteilnehmern auf weniger belastete Straßen. Es ist bekannt, zu diesem Zweck straßenseitig installierte stationäre Erfassungseinrichtungen (z.B. Baken, Induktionsschleifen o.ä.) zu verwenden. Dies ist nicht nur mit sehr hohen Kosten für die Schaffung und Erhaltung der erforderlichen Infrastruktur verbunden, sondern hat auch den Nachteil, daß diese Einrichtungen systembedingt jeweils nur einen lokal außerordentlich eng begrenzten Einsatzbereich aufweisen. Für eine flächendeckende Verkehrslageerfassung ist daher die Installation einer riesigen Anzahl von Erfassungseinrichtungen notwendig.

In jüngerer Zeit sind auch Ansätze bekannt geworden, eine Verkehrslageerfassung ohne fest installierte straßenseitige Einrichtungen vorzunehmen, indem aus den Fahrzeugen einer Stichprobenfahrzeugflotte entsprechende Informationen an geeignete Sammelstellen (z.B. Verkehrsleitzentrale) übermittelt werden. Es handelt sich dabei quasi um im Verkehr mitschwimmende Meßstationen ("floating probes"), die relevante Daten (insbesondere die Fahrzeuggeschwindigkeit) über eine mobile drahtlose Kommunikationseinrichtung (z.B. ein Funktelefon) an die jeweilige Datensammelstelle zur Weiterverarbeitung und Auswertung übertragen. Das Ergebnis der Auswertung kann dann einer Vielzahl von Verkehrsteilnehmern im Sinne von Verkehrshinweisen und Ausweichempfehlungen übermittelt werden, so daß die Verkehrsteilnehmer verkehrslageabhängig eine möglichst günstige Entscheidung über die zu wählende Fahrtroute treffen können.

Vielfach sind einzelne Aufgaben im Rahmen der Verkehrstelematik beschränkt auf bestimmte Verkehrssegmente, z.B. Fernverkehr auf Autobahnen oder innerstädtischer Verkehr. Im Rahmen der Datenerfassung über das Verkehrsgeschehen, die zweckmäßigerweise mittels entsprechender Endgeräte in den Fahrzeugen einer Stichprobenfahrzeugflotte völlig automatisch abläuft, ist es von Interesse, im Bedarfsfall die relevanten Verkehrsdaten nur von solchen Fahrzeugen an die Datensammelstelle übermittelt zu bekommen, die sich auf einem ganz bestimmten vorgegebenen Typ von Straße befinden. Dadurch läßt sich die Belastung der Datenkanäle des benutzten Kommunikationssystems in erträglichen Grenzen halten. Die Erkennung des Straßentyps sollte durch das jeweilige Fahrzeug autonom möglich sein.

Dieser Vorgang erfordert nicht nur das Vorhandensein eines geeigneten Ortungssystems zur Bestimmung der aktuellen Position des Fahrzeugs, also beispielsweise ein auf der Basis von Navigationssatelliten basierendes Gerät. Darüber hinaus ist es bisher erforderlich, daß im Fahrzeug eine digitalisierte Straßenkarte mitgeführt wird, aus der anhand der vom Ortungssystem gelieferten Positionsdaten durch entsprechendes "map matching" die tatsächlich befahrene Straße entnommen werden kann. Schwierigkeiten können sich dabei aber insbesondere dadurch ergeben, daß die Positionsbestimmung mit einer gewissen Ungenauigkeit behaftet ist, die so groß sein kann, daß vielfach keine eindeutige Zuordnung der aktuellen Position zu einer von mehreren in Frage kommenden (dicht beieinanderliegenden) Straßen möglich ist. Hinzu kommt, daß das Mitführen einer digitalisierten Straßenkarte (z.B. auf CD-ROM) einen beträchtlichen Aufwand darstellt, und zwar einerseits für die erforderlichen Speicher- und Lesevorrichtungen und andererseits für die Pflege der Karte zur Erhaltung ihrer Aktualität. Auch die Möglichkeit, die Erkennung des Straßentyps in die Datensammelstelle zu verlagern und das Ergebnis an das Fahrzeug zurückzumelden, ist wegen des außerordentlichen Kommunikationsaufwandes wenig zweckmäßig.

Es besteht daher ein Bedürfnis dafür, den befahrenen Straßentyp im Fahrzeug mit einer hinreichenden Genauigkeit ohne großen Aufwand automatisch ermitteln zu können. Dies ist nicht nur im Rahmen der Ermittlung und Sammlung von Verkehrsdaten sinnvoll, sondern ist auch vorteilhaft nutzbar, wenn aufbereitete Verkehrsinformationen von Verkehrsteilnehmern z.B. mittels Radiogeräten, Mobilfunk odeer anderen Kommunikationsmitteln empfangen und gespeichert werden, um auf Anforderung des Verkehrsteilnehmers zu beliebigen Zeitpunkten aus dem Speicher abgerufen werden zu können. Wenn ein Fahrzeug im Fernverkehr sich z.B. auf einer Autobahn befindet, sind Verkehrsinformationen über Nebenstraßen im Regelfall nicht von Interesse. Sowohl aus ergonomischen Gründen als auch im Hinblick auf den benötigten Speicherplatz ist eine Begrenzung der dargestellten bzw. gespeicherten Informationen sinnvoll. Zur Begrenzung der Informationen wäre es daher nützlich, wenn im Empfangsgerät eine automatische Selektion der empfangenen Informationen vorgenommen würde, um straßentypabhängig lediglich die relevanten Verkehrsinformationen darzustellen bzw. zu speichern.

Eine Anlage zur Positionserkennung von Fahrzeugen innerhalb eines Überwachungsgebietes ist aus der DE 39 32 029 A1 bekannt. Hierbei sind eine Vielzahl von ortsfesten Positionssendern vorgesehen und in den Fahrzeugen befinden sich Empfänger zur Aufnahme des Signales des nächstgelegenen Positionssenders. Ferner sind in den Fahrzeugen Sender vorgesehen, über die Daten an die Zentrale übertragbar sind.
Vom Fahrzeug zur zentralen Leistelle sind auch bei der Anlage, die in der DE Funkschau 21/1989, Seiten 56 bis 60 beschrieben ist, Ortungs- und Statusinformationen übertragbar.

Aufgabe der Erfindung ist es daher, ein Verfahren zur Selektion von empfangenen oder zu sendenden Verkehrsinformationen in einem Fahrzeug vorzuschlagen, wobei die Selektion in Abhängigkeit vom Typ der momentan vom Fahrzeug befahrenen Straße erfolgt und zur fahrzeugautonomen Erkennung des Straßentyps keine digitale Straßenkarte im Fahrzeug mitgeführt werden muß. Ferner soll eine Vorrichtung zur Durchführung des Verfahrens angegeben werden.

Gelöst wird diese Aufgabe durch ein Verfahren mit den Merkmalen des Patentanspruchs 1. Vorteilhafte Weiterbildungen dieses Verfahrens ergeben sich aus den Unteransprüchen 2 bis 8. Eine Vorrichtung zur Durchführung des Verfahrens weist die Merkmale des Unteranspruchs 9 auf.

Die Erfindung sieht vor, mittels einer im Fahrzeug mitgeführten und allgemein als Ortungseinrichtung bezeichneten Vorrichtung fortlaufend eine Bestimmung des geometrischen Fahrtverlaufs des Fahrzeugs anhand mehrever Fahrtabschnitt vorzunehmen. Als Ortungseinrichtungen in diesem Sinne können z.B. Geräte zur Positionsbestimmung durch Satellitennavigation oder auch einzeln oder in Kombination miteinander Radsensoren, Tachometer bzw. Kilometerzähler, Beschleunigungssensoren sowie Kreisel- und Magnetfeldsensoren oder ähnliches eingesetzt werden. Die Angaben über den jeweiligen Abschnitt des Fahrtverlaufs (z.B. Streckenabschnitte von 200 bis 500 m) umfassen mindestens die relative Lage des Anfangs- und Endpunktes dieses Abschnitts zueinander. Im einfachsten Fall kann dies der Abstand der beiden Punkte sein. Es können aber auch die Positionsdaten der beiden Punkte in einem relativen oder absoluten Koordinatensystem angegeben werden. Zweckmäßigerweise werden mindestens vier Punkte zur Beschreibung des Abschnitts des Fahrtverlaufs herangezogen. Eine gute Information bieten insbesondere Richtungsangaben über den Fahrtverlauf in den jeweiligen Punkten.

Das Erkennungsprinzip der Erfindung beruht darauf, daß sich bestimmte Straßentypen (z.B. Autobahnen und Straßen mit getrennten Richtungsfahrbahnen einerseits und innerstädtische Straßen oder Nebenstraßen andererseits) sich durch charakteristische geometrische Merkmale mit relativ großer Sicherheit voneinander unterscheiden lassen. Die Erfindung sieht daher vor, den abschnittsweise erfaßten geometrischen Fahrtverlauf mit charakteristischen geometrischen Kenngrößen von bestimmten Straßentypen im Sinne einer Mustererkennung miteinander zu vergleichen. Besonders geeignet für eine solche Kenngröße ist beispielsweise ein kleinster zulässiger Kurvenradius für den jeweiligen Straßentyp. Dieser Grenzwert ist für eine Autobahn bedeutend größer als für eine Nebenstraße oder Landstraße. Ein ähnlicher Informationsgehalt läßt sich durch Angabe der maximal zulässigen Richtungsänderung bezogen auf eine zurückgelegte Strecke erzielen. Eine weitere Möglichkeit besteht darin, einen erfaßten Verlauf eines Fahrtabschnitts zu extrapolieren und die prädizierte Position mit der danach tatsächlich gemessenen Position zu vergleichen und das Maß der Abweichung (Abstand) mit einer straßentypabhängigen maximal zulässigen Abweichung zu vergleichen.

Wesentlich für eine möglichst zuverlässige Durchführung der Erfindung ist es, daß die relative Meßgenauigkeit an den einzelnen Meßpunkten des Fahrtabschnitts signifikant besser ist als die Größe der charakteristischen geometrischen Kenngrößen des Straßentyps. Bei der Ermittlung der Lage einzelner Meßpunkte kommt es also nicht auf die genaue absolute Position, sondern nur auf die möglichst exakte Bestimmung der einzelnen Positionen relativ zueinander an. Diese Vorgehensweise läßt mit recht hoher Sicherheit Aussagen zu, auf welchem Straßentyp sich einzelne Fahrzeuge einer Stichprobenfahrzeugflotte gerade befinden. Dabei ist es auch möglich, beispielsweise das Ansteuern eines Autobahnparkplatzes oder einer Raststätte oder das Wechseln von einer Autobahn zu einer anderen zu unterscheiden vom Benutzen einer Autobahnabfahrt und der Weiterfahrt auf einer Bundesstraße. Kennzeichnend für die Erfindung ist es, daß sie keine Zeitbetrachtungen erfordert, sondern allein mit geometrischen Angaben über den Fahrtverlauf auskommt.

Anhand der Figuren wird die Erfindung nachfolgend noch weiter erläutert. Es zeigen:
- Fig. 1: ein Beispiel für den Abschnitt eines Fahrtverlaufs und
- Fig. 2: eine erfindungsgemäße Vorrichtung als Blockschaltbild

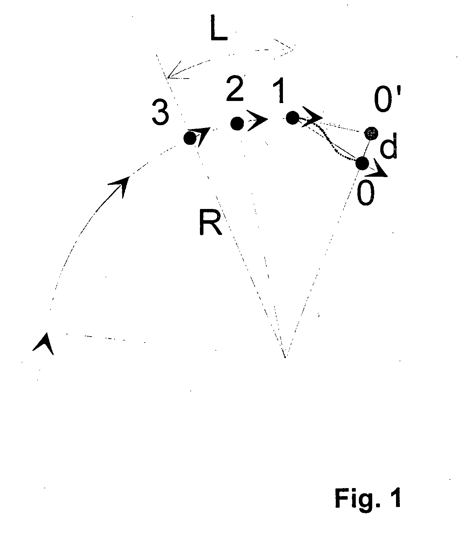

In Fig. 1 ist schematisch der geometrische Verlauf der Fahrt eines Fahrzeugs dargestellt, das nacheinander die gemessenen Positionen 3, 2 und 1 erreicht hat. Aus diesem Verlauf der Fahrt läßt sich bereits ein Vergleich mit geeigneten charakteristischen geometrischen Merkmalen eines Straßentyps durchführen. So läßt sich beispielsweise aus diesem Verlauf angenähert der Kurvenradius R ermitteln und mit einem vorgegebenen Grenzwert für den Straßentyp vergleichen. Eine andere Möglichkeit besteht in einem Vergleich der tatsächlichen Richtungsänderung bezogen auf die Streckenlänge L zwischen den Punkten 3 und 1 und einem entsprechenden straßentypabhängigen vorgegebenen Grenzwert. Es könnte aber beispielsweise auch eine Extrapolation des zwischen den Punkten 3 und 1 gemessenen Streckenverlaufs zum prädizierten Punkt 0'erfolgen. Ein Vergleich mit der tatsächlich vom jeweiligen Fahrzeug erreichten Position 0 ergibt eine Abweichung d. Liegt der Wert von d über einem wiederum straßentypabhängig vorgegebenen Grenzwert, so ist dies ein Indiz dafür, daß der Straßentyp vom Fahrzeug gewechselt wurde oder beim Befahren einer Autobahn gerade ein Parkplatz oder eine Ausfahrt benutzt wird. Zur möglichst eindeutigen Zuordnung zu einem bestimmten Straßentyp empfiehlt es sich, bei der Entscheidung möglichst mehrere voneinander unabhängige Kriterien zugrunde zu legen.

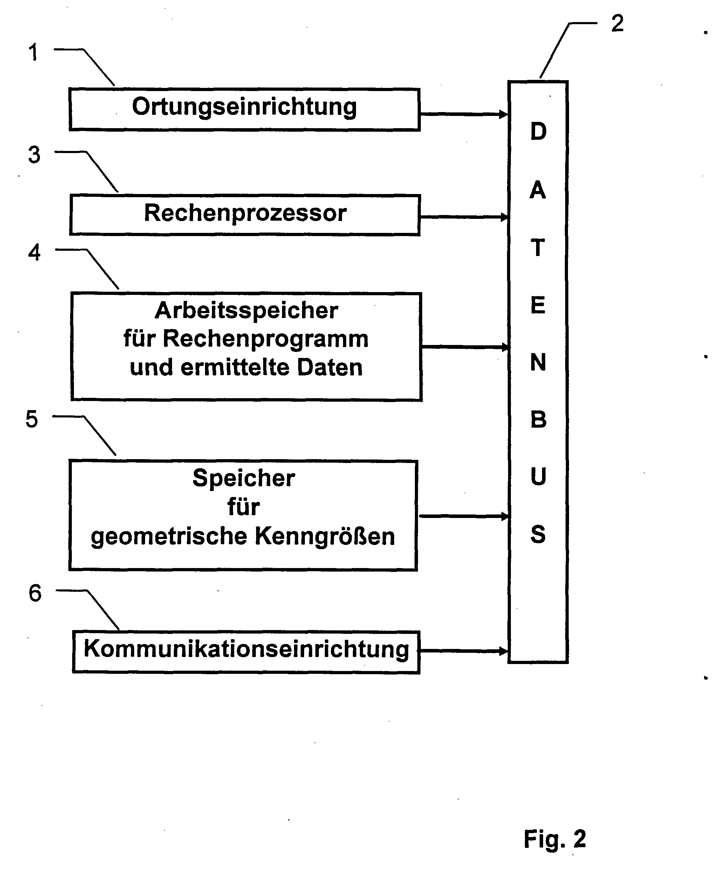

Das in Fig. 2 dargestellte Funktionsschema einer Vorrichtung zur Durchführung des erfindungsgemäßen Verfahrens weist eine Ortungseinrichtung 1, einen Rechenprozessor 3, einen Arbeitsspeicher 4 für ein Rechenprogramm und ermittelte Daten sowie einen Speicher 5 mit festen Vorgabewerten auf. Diese Vorgabewerte sind charakteristische geometrische Kenngrößen, die jeweils für bestimmte Straßentypen kennzeichnend sind, so daß der Straßentyp anhand eines Vergleichs des Fahrtverlaufs eines Fahrzeugs mit diesen Vorgabewerten identifiziert werden kann. Da die Ortungseinrichtung 1, der Rechenprozessor 3, der Arbeitsspeicher 4 und der Speicher 5 mit den Vorgabewerten über einen Datenbus 2 miteinander verbunden sind, kann der Vergleich zur Identifizierung des Straßentyps von dem Rechenprozessor 3 durchgeführt werden. Hierzu ist das Rechenprogramm des Arbeitsspeichers 4 so eingerichtet, daß die direkt oder indirekt (d.h. nach Umrechnung) von der Ortungseinrichtung gelieferten geometrischen Daten über einen Abschnitt des Fahrtverlaufs mit den geometrischen Kenngrößen aus dem Speicher 5 im Sinne eines Mustervergleichs verglichen werden. Abhängig vom Ergebnis dieses Vergleichs, d.h. abhängig vom identifizierten Straßentyp kann nun der Rechenprozessor 3 auf eine ebenfalls an den Datenbus 2 angeschlossene Kommunikationseinrichtung 6 einwirken, um die Sendung von ermittelten Verkehrsdaten an eine Datensammelstelle oder die Speicherung von empfangenen Verkehrsinformationen zu veranlassen oder zu unterdrücken. Die Kommunikationseinrichtung 6 kann also beispielsweise eine Radioeinrichtung mit Speichermöglichkeit für Verkehrssinformationen oder auch ein Mobiltelefon sein, welches in einem Fahrzeug einer Stichprobenfahrzeugflotte eingebaut ist.

Die Erfindung ermöglicht mit sehr einfachen handelsüblichen elektronischen Bausteinen eine hinreichend zuverlässige fahrzeugautonome Identifizierung des jeweils befahrenen Straßentyps, ohne das es hierzu des Mitführens einer digitalen Straßenkarte im Fahrzeug oder manueller Eingriffe bedarf. Selbstverständlich kann, wenn beispielsweise im Rahmen eines im Fahrzeug vorhandenen on-board-Zielführungssystems eine digitale Straßenkarte ohnehin zur Verfügung steht, die Erfindung auch unter zusätzlicher Nutzung der daraus erhältlichen Informationen angewendet werden. Dies würde die Sicherheit der richtigen Identifizierung des jeweiligen Straßentyps praktisch auf 100 % erhöhen. In diesem Zusammenhang könnte die Selektion der Verkehrsinformationen darin bestehen, daß z.B. die insgesamt empfangenen Verkehrsinformationen auf den Display des Zielführungssystems nur insoweit (z.B. als Symbol) dargestellt werden, wie sie Straßen desjenigen Typs betreffen, den das Fahrzeug gerade befährt.

## Patentansprüche

1. Verfahren zur Selektion von empfangenen oder zu sendenden Verkehrsinformationen in einem Fahrzeug, wobei die Selektion in Abhängigkeit vom Typ der Straße, die das Fahrzeug momentan befährt, erfolgt, wobei fahrzeugseitig die Geometrie des Fahrtverlaufs anhand mehrerer Fahrtabschnite bestimmt wird, wobei die Angaben zum jeweiligen Abschnitt des geometrischen Fahrtverlaufs mindestens die relative Lage des Anfangs- und Endpunkts dieses Abschnitts zueinander umfassen, und daß dieser Abschnitt des Fahrtverlaufs mit charakteristischen geometrischen Kenngrößen von Straßentypen verglichen wird, und daraus der aktuell befahrene Straßentyp bestimmt und als Selektionskriterium benutzt wird.

2. Verfahren nach Anspruch 1,
dadurch gekennzeichnet,
daß die relative Lage des Anfangs- und Endpunktes durch ihren Abstand voneinander angegeben wird.

3. Verfahren nach Anspruch 1,
dadurch gekennzeichnet,
daß die relative Lage des Anfangs- und Endpunktes durch ihre Positionsdaten angegeben wird.

4. Verfahren nach einem der Ansprüche 1 bis 3,
dadurch gekennzeichnet,
daß der Abschnitt des geometrischen Fahrtverlaufs durch die Positionsdaten von mindestens vier Punkten angegeben wird.

5. Verfahren nach einem der Ansprüche 1 bis 4,
dadurch gekennzeichnet,
daß zusätzlich Fahrtrichtungsinformationen zu einzelnen Punkten erfaßt und beim Vergleich berücksichtigt werden.

6. Verfahren nach einem der Ansprüche 1 bis 5,
dadurch gekennzeichnet,
daß als charakteristische geometrische Kenngröße der kleinste zulässige Kurvenradius des Straßenverlaufs beim jeweiligen Straßentyp benutzt wird.

7. Verfahren nach einem der Ansprüche 1 bis 6,
dadurch gekennzeichnet,
daß als charakteristische geometrische Kenngröße eine maximal zulässige Richtungsänderung pro zurückgelegter Strecke benutzt wird.

8. Verfahren nach einem der Ansprüche 1 bis 7,
dadurch gekennzeichnet,
daß als charakteristische geometrische Kenngröße eine maximal zulässige Abweichung der tatsächlich erreichten Position von einer prädizierten Position für einen Fahrtabschnitt herangezogen wird.

9. Vorrichtung in einem Fahrzeug zur Durchführung des Verfahrens nach Anspruch 1, mit einem Rechenprozessor (3), einem Arbeitsspeicher (4) für ein Rechenprogramm und ermittelte Daten und einem Speicher (5) für feste Vorgabewerte, ferner mit einer Ortungseinrichtung (1) sowie mit einer Kommunikationseinrichtung für den Empfang und/oder das Senden von Informationen, wobei der Rechenprozessor (3), der Arbeitsspeicher (4) und der Speicher (5) über einen Datenbus (2) verbunden sind,
dadurch gekennzeichnet,
- daß auch die Ortungseinrichtung (1) an den Datenbus angeschlossen ist,
- daß der Speicher (5) charakteristische geometrische Kenngrößen enthält, die für bestimmte Straßentypen kennzeichnend sind,
- daß das Rechenprogramm auf einen Vergleich der von der Ortungseinrichtung (1) direkt oder indirekt gelieferten geometrischen Daten über einen Abschnitt des Fahrtverlaufs mit den charakteristischen geometrischen Kenngrößen aus dem Speicher (5) eingerichtet ist und
- daß der Rechenprozessor auf die Kommunikationseinrichtung (6) in dem Sinne einwirkt, daß die Sendung von Verkehrsinformationen oder die Speicherung und/oder Darstellung von empfangenen Verkehrssinformationen abhängig vom Ergebnis der durch den Vergleich bewirkten Straßentyperkennung erfolgt oder unterbleibt.

## Claims

1. Method for selecting traffic information which is received or is to be transmitted in a vehicle, wherein the selection takes place in accordance with the type of road travelled by the vehicle at the time, wherein the geometry of the travel course is determined in the vehicle on the basis of a plurality of travel sections, wherein the data on the respective section of the geometric travel course include at least the position of the starting and the end point of this section relative to one another, and that this section of the travel course is compared with characteristic geometric parameters of road types, and the road type actually travelled is determined from this and used as selection criterion.

2. Method according to Claim 1,
characterised in that the relative position of the starting and the end point is given by their distance from one another.

3. Method according to Claim 1,
characterised in that the relative position of the starting and the end point is given by their position data.

4. Method according to any one of Claims 1 to 3,
characterised in that the section of the geometric travel course is given by the position data of at least four points.

5. Method according to any one of Claims 1 to 4,
characterised in that direction of travel information is additionally acquired at individual points and taken into account in the comparison.

6. Method according to any one of Claims 1 to 5,
characterised in that the minimum permissible curve radius of the road course for the respective road type is used as characteristic geometric parameter.

7. Method according to any one of Claims 1 to 6,
characterised in that a maximum permissible change of direction per route which is covered is used as characteristic geometric parameter.

8. Method according to any one of Claims 1 to 7,
characterised in that a maximum permissible deviation of the position actually reached from a predicted position for a travel section is used as characteristic geometric parameter.

9. Apparatus in a vehicle for carrying out the method according to Claim 1, with a computing processor (3), a working memory (4) for a computing program and established data and a memory (5) for fixed predetermined values, also with a locating device (1) and with a communication device for receiving and/or transmitting information, wherein the computing processor (3), the working memory (4) and the memory (5) are connected via a data bus (2),
characterised in
- that the locating device (1) is also connected to the data bus,
- that the memory (5) contains characteristic geometric parameters which are characteristic of certain road types,
- that the computing program is adapted for comparing the geometric data supplied directly or indirectly by the locating device (1) over a section of the travel course with the characteristic geometric parameters from the memory (5), and
- that the computing processor acts on the communication device (6) in the sense that the transmission of traffic information or the storage and/or representation of received traffic information takes place or does not occur, according to the result of the road type identification effected by the comparison.

## Revendications

1. Procédé pour sélectionner des informations de trafic reçues ou à envoyer dans un véhicule, la sélection étant effectuée de façon dépendant du type de la voie routière, que parcourt, à un instant donné, le véhicule, la géométrie de l'allure du trajet étant déterminée, du côté du véhicule, en référence à plusieurs tronçons de trajet, les indications par rapport au tronçon respectif de l'allure du trajet géométrique comportant au moins les positions relatives du début et de la fin de ce tronçon l'une par rapport à l'autre, et ce tronçon de l'allure du trajet étant comparé à des paramètres géométriques caractéristiques de types de voies routières et, de là, le type de voie routière actuellement parcouru est déterminé et est utilisé comme critère de sélection.

2. Procédé selon la revendication 1,
caractérisé en ce que les positions relatives du début et de la fin d'un tronçon sont fournies par leur écartement l'une de l'autre.

3. Procédé selon la revendication 1,
caractérisé en ce que les positions relatives du début et de la fin d'un tronçon sont fournies par leurs données de position.

4. Procédé selon une des revendications 1 à 3,
caractérisé en ce que le tronçon de l'allure du trajet géométrique est fourni par les données de position d'au moins quatre points.

5. Procédé selon une des revendications 1 à 4,
caractérisé en ce que des informations de direction de trajet sont détectées de façon supplémentaire en des points individuels et sont prises en compte lors de la comparaison.

6. Procédé selon une des revendications 1 à 5,
caractérisé en ce que, comme paramètre géométrique caractéristique, il est utilisé le plus petit rayon de courbure autorisé de l'allure de la voie routière pour le type respectif de voie routière.

7. Procédé selon une des revendications 1 à 6,
caractérisé en ce que, comme paramètre géométrique caractéristique, il est utilisé une modification de direction permise au maximum par étendue parcourue.

8. Procédé selon une des revendications 1 à 7,
caractérisé en ce que, comme paramètre géométrique caractéristique, il est utilisé un écart permis au maximum de la position effectivement atteinte d'une position prédite pour un tronçon de trajet.

9. Dispositif dans un véhicule pour la mise en oeuvre du procédé selon la revendication 1, comportant un processeur de calcul (3), une mémoire de travail (4) pour un programme de calcul et des données détectées, et une mémoire (5) pour des valeurs fixes prédéfinies, de plus, un dispositif de repérage (1) ainsi qu'un dispositif de communication pour la réception et/ou l'émission d'informations, le processeur de calcul (3), la mémoire de travail (4), et la mémoire (5) étant reliés par l'intermédiaire d'un bus de données (2),
caractérisé en ce que :
- également le dispositif de repérage (1) est raccordé au bus de données,
- la mémoire (5) comporte des paramètres géométriques caractéristiques, qui caractérisent des types déterminés de voies routières,
- le programme de calcul est adapté pour une comparaison des données géométriques délivrées de façon directe ou indirecte par le dispositif de repérage (1) sur un tronçon de l'allure du trajet avec les paramètres géométriques caractéristiques à partir de la mémoire (5), et
- le processeur de calcul agit sur le dispositif de communication (6) dans le sens que l'émission d'informations de trafic ou la mémorisation et/ou la représentation d'informations de trafic reçues sont effectuées, ou non, de façon dépendant du résultat de la reconnaissance du type de voie routière obtenue par la comparaison.
